# EUROPEAN PATENT APPLICATION

(11) **EP 1 591 674 A1**
(43) Date of publication of application: **02.11.2005**
(21) Application number: 05009457.2
(22) Date of filing: 29.04.2005
(51) Int. Cl.: F16B 12/42

(54) **Connecting device for structure**

(30) Priority: 30.04.2004 IT BO20040270
(71) Applicant: Gibam Shops S.r.l., Bellocchi di Fano (PU) (IT)
(72) Inventor: Giovanelli, Novello, 61032 Fano (PU) (IT)
(74) Representative: Negrini, Elena

(57) **Abstract**

A connecting device for structures (2) comprises at least an assembly upright elements (3) and an assembly connection elements (4).

Each upright element (3) has at least a couple of connection walls (5) longitudinal and convergent inwardly the upright element (3) and fit to match respective jaw means (6, 7) of a connection element (4) operated by clamping means (8) between an open condition (A), in which are disengaged from the couple of connection walls (5), and a closed condition (C) in which clamp such couple of walls (5).

## Description

The present invention relates to sectional structures and refers to a connecting device for structure particularly for furniture, shelves, supports and generally for sectional constructions.

Uprights are known provided with seats for threaded nuts fit to fix screws of shelves or horizontal crossbars. Uprights are also known provided with grooves, each of them for expansion means of shelves or uprights.

Such known solutions have complex and difficult and long application, also involving, sometimes, the risk of damage of their parts.

The main object of the present invention is to propose a connecting device for a structure allowing to quickly and easily get the connections among the elements of the structure.

Other purpose, is to propose a device virtually without risk of damage of its parts because, for example, of an excessive clamping strength.

Further purpose is to propose a device for the realization by hand of solid and sure connections without the use of utensils.

Other purpose is to propose a device for the realization of connections in any point or in a predetermined point of an element.

Further purpose is to propose a proper device for the realization of self-supporting or walled shelves, eventually predisposed for the installation of technological nets, for the realization of furniture, furniture and technical containers such as rack, for chandeliers and for trestle and sectional structures.

The above-mentioned objects are achieved according to the content of the claims.

The characteristics of the invention are underlined in the following with particular reference to the attached drawings, in which:

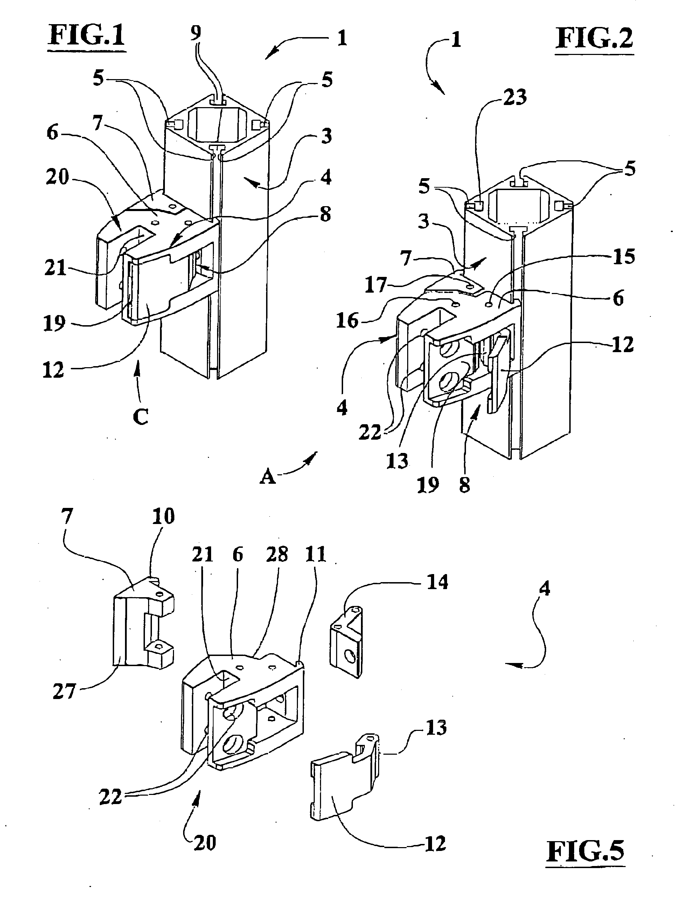

Figure 1 and 2 show partial and axonometric views of upright and connection elements of the device of the invention, under conditions respectively of mutual fixing and partial detachment;
Figures 3 and 4 show plant views, partially sectioned, of the device of figures 1 and 2;
Figure 5 shows an exploded view of the connection element of figure 1 in which some parts have been removed;
Figures 6 and 7 respectively show frontal and side views of an optional ruler mean of the device of figure 1;
Figure 8 shows a plant view, partially sectioned, of the upright element associated to three connection elements of the device of figure 1;
Figure 9 shows a plant view, partially sectioned, of the upright element associated to two connection elements of the device of figure 1 and of a retention mean for panels, optional, associated to the upright element;
Figure 10 shows a plant view, partially sectioned, of a variation of the upright element associated to two connection elements of the device of figure 1;
Figure 11 shows a plant view, partially sectioned, of a further variation of the upright element associated to a connection element of the device of figure 1;
Figure 12 shows a partial and axonometric view of the upright and connection elements of the device of figure 1 associated to a shelf having an optional terminal mean;
Figure 13 shows an axonometric view of an exhibitor realized also through the device of figure 1 and the seat mean of figure 9;

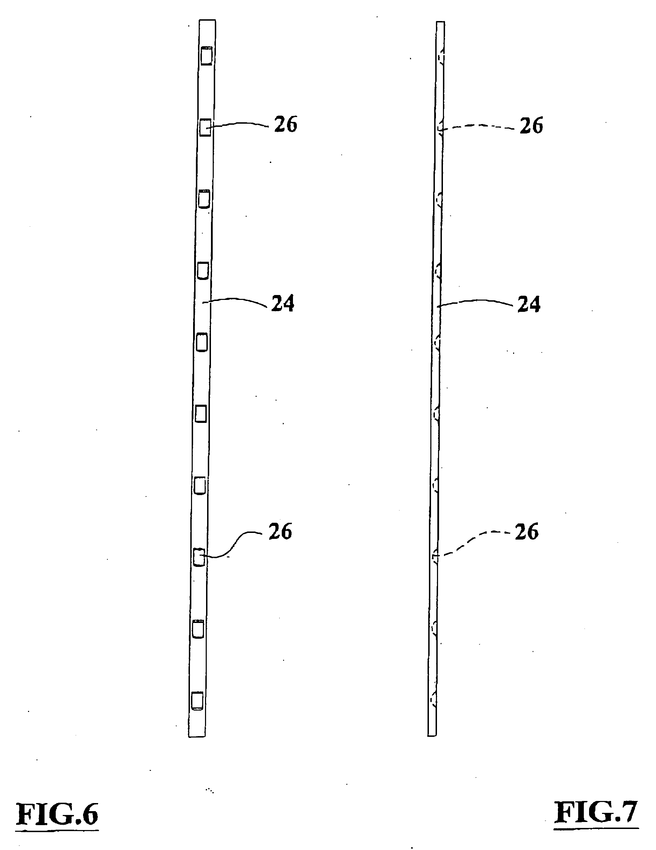

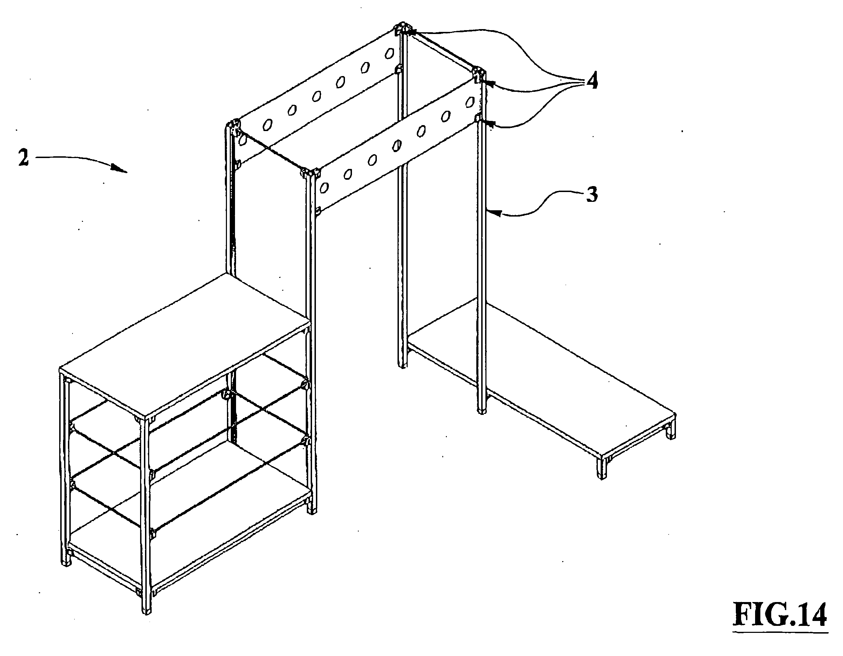

Figure 14 shows an axonometric view of a shelving piece of furniture realizable with elements similar to those pieces of the furniture of figure 13;
Figure 15 shows an axonometric view of a shelf realized also by the connection element of the device of figure 1 and the variation of figure 10 of the upright element;
Figure 16 shows an axonometric view of a walled shelf realized also by means of the connection element of figure 1 element and the variant of figure 11 of the upright element.

With reference to figures from 1 to 8 and 14, numeral 1 designates the connecting device, object of the present invention, for structures 2.

The device 1 comprises an assembly of upright elements 3, of lengthened prismatic shape and an assembly of connection elements 4 for the connection of further elements of the structure to the upright elements 3.

The upright elements 3 are approximately of square section and have, in correspondence of each vertex, a longitudinal groove 9 having rectangular 45° tilted section with respect to the contiguous faces of the upright element 3 and therefore directed toward the central axis of the same upright element 3.

The inside faces of the grooves 9 constitute respective connecting walls 5 longitudinal and convergent toward the inside of the upright element 3; particularly the connection walls 5 of two adjacent grooves 9 are reciprocally tilted of 90° and are destined to match respective jaw means 6, 7 of one or more connection elements 4.

The jaw means 6, 7 have respective match portions 10, 11, reciprocally tilted of around 90° and destined to find respective connection walls 5 of two grooves 9 adjacent to which are nearly parallel.

The jaw means 6, 7 are activated by clamping means 8 between an open condition A in which they are reciprocally separated for disengaging the couple of connection walls 5 and allowing the match or the separation of the connection element 4 from the respective face of the upright element 3, and a closed condition C in which they are reciprocally approached and they clamp such couple of walls 5 by blocking the connection element 4 to the upright element 3.

The width of each match portion 10, 11 is lower to the half thickness of the grooves 9. In such a way two connection elements 4 can be fixed, engaged in the same groove 9, in the same longitudinal position of an upright element 3 without impediments and interferences between the match portions 10, 11 of the two connection elements 4.

The clamping means 8 of each connection element 4, comprise a lever mean 12 connected to the first jaw mean 6 of the connection element 4, for activating its eccentric mean 13 acting on an end of a balance mean 14 whose central portion and the remaining end are respectively swiveling connected to first 6 and second 7 jaw mean.

The first lever mean 12 is swiveling connected to the first jaw mean 6 by a first pivot 15 placed in correspondence of the cam shaped eccentric mean 13 and the balance mean 14 is approximately "L" shaped forming an angle slightly greater of 90°. The balance mean 14 is connected to the jaw means 6, 7 through respective pivots second 16 and third 17 nearly parallel to the first one 15.

The first jaw mean 6 comprises clastic means 18, consisting in a pressed helicoidally spring whose ends are housed in respective seats carried out in the balance mean 14 and in the first jaw mean 6. The elastic means apply to the balance mean 14 a counter force opposed to the force applied to this latter by the eccentric mean 13 to elastically maintain the first lever mean 12 in wide apart position in the open condition A.

The second jaw mean 7 comprises protruding means 27 fit to match the first jaw mean 6 at least in the closed condition C.

The protruding means 27 arc faced to a shaped surface 28 of the first jaw mean 6 roughly complementary to a corresponding portion of the second jaw mean 7. The shaped surface 28 of the first jaw mean 6 and the corresponding portion of the second jaw mean 7 have corresponding beat surfaces 29 which in the closed condition C define a plain containing or next to the axle of the second pivot 16.

Such disposition of the protruding means 27, of the shaped surface 28 and of the beat surfaces 29 allows the realization of a sure closed condition C also in case of relatively elevated tolerances of the element manufacturing.

The first jaw mean 6 has a lodging 19 for the lever mean 12 in the closed condition C in which the lever mean is contained in the profile of the first jaw mean 6.

The first jaw mean 6 has fixing means 20 for elements such as shelves, supports, crossbars, panels and similar. Such fixing means 20 comprise a recess 21 for an edge of an element and holes 22 for screws, thorns or similar block elements.

When using thorns, pivots or similar blocking means, their protruding from the respective holes 22 is prevented by the mean lever 12 in the closed condition C.

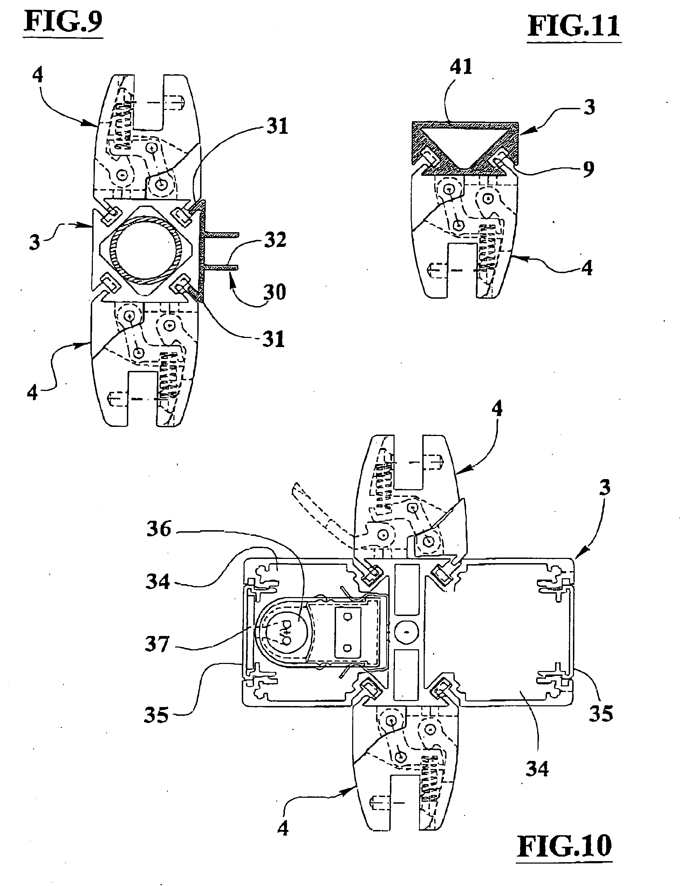

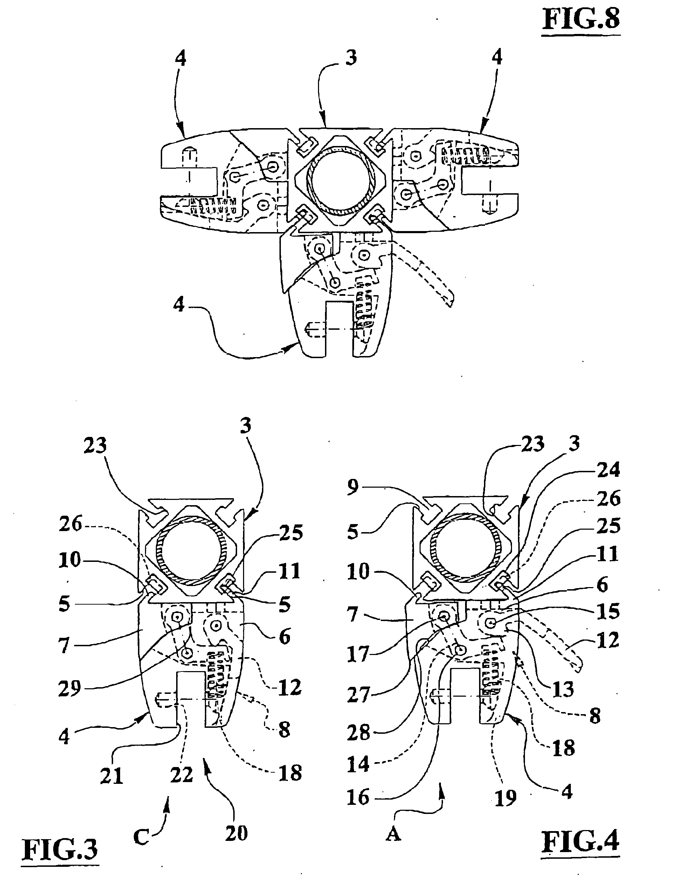

Optionally each upright element 3 can comprises longitudinal hollow 23, each drawn in the bottom of a corresponding groove 9. The longitudinal hollow 23 are made for housing ruler means 24, shown also in figures 6 and 7, destined to the correct longitudinal positioning of the connection elements 4 along the upright element 3. The ruler means can have graduated scales referencing the positioning.

Preferably it is provided that each of the ruler means 24 has a plurality of regularly spaced recesses 26 and that the match portion 11 of each first jaw mean 6 has a protrusion 25 fit to engage, in the closed condition C, one of such recesses 26 preventing the block of the connection element 4 in intermediary positions among the recesses 26.

The operation of the device provides, for instance, the fixing of crossbars, shelves, arms, supports and similar to the connection elements 4 and the connection of these last to the upright elements, by means of simple manual operation of the lever means 12, for the realization of structures 2 such as shelves, exhibitors and similar.

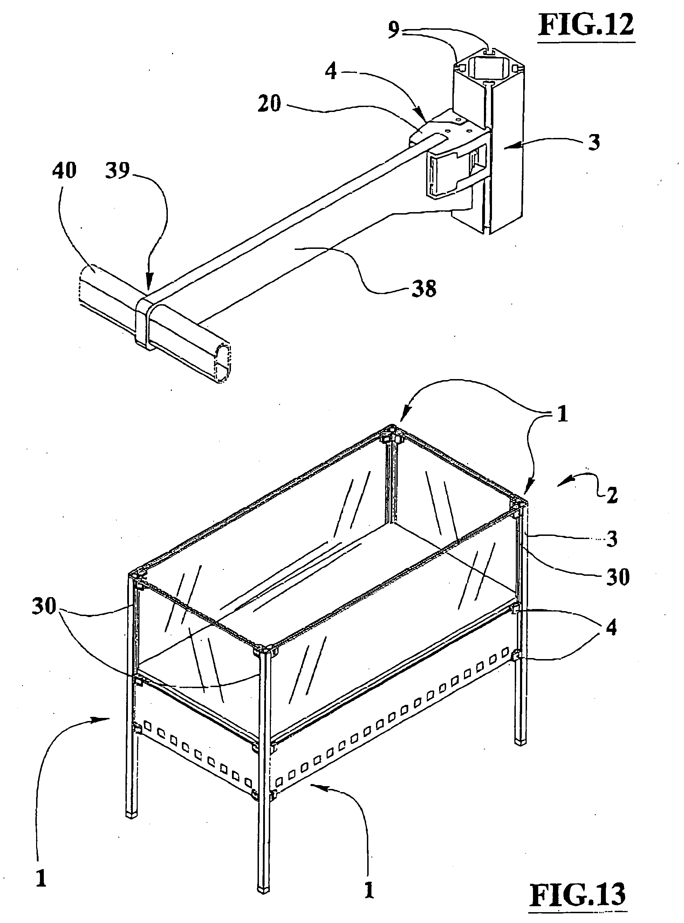

The retention mean 30 for panels, plates or similar, of figures 9 and 13, optionally provided to realize, for instance, plugging and showcases also with plates hardly pierceable, is provided with two longitudinal fins 31 destined to partially engage two adjacent groves 9 of an upright mean 3 and is provided with a respective longitudinal seat 32 for the panels, plates and similar.

The fins of the retention means 30 have shapes and dimensions similar to those of the match portions 10, 11 of the jaw means 6, 7.

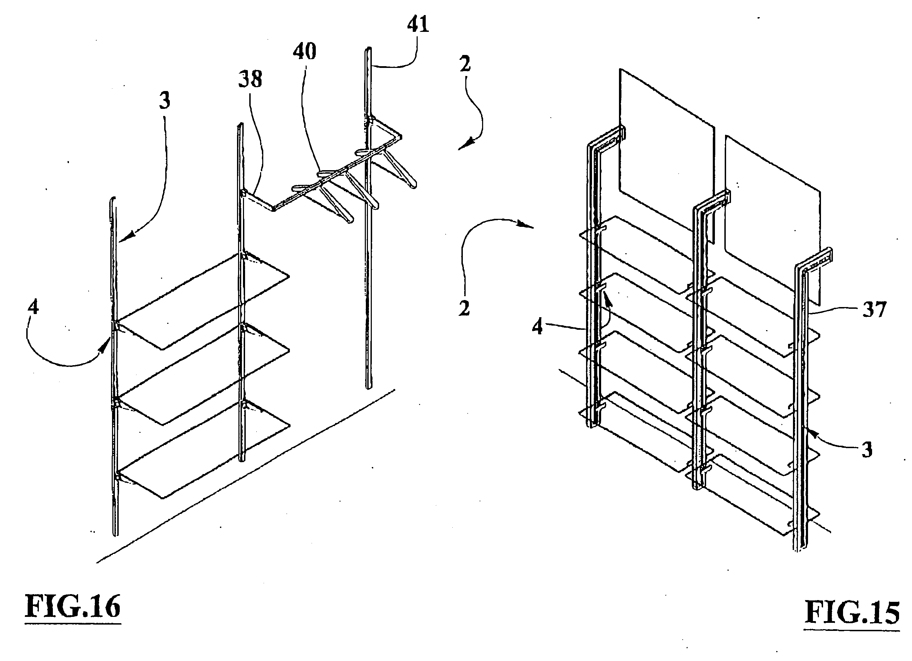

The variation of the upright element of figures 10 and 15 is particularly suitable for the realization of structures, for instance shelf, self-supporting or wall connected, with illumination, for instance for exposing objects such as clothing accessories, custom jewelry, glassware or for technological nets, such as power supplies and antenna connections, reproducers or other instruments for instance to expose televisions, acoustic diffusers or other apparatuses under operating conditions.

Such variation provides that the upright elements 3 have side longitudinal housing 34 for fittings or nets and provided with respective access covers 35.

At least a side housing 34 contains bright sources 36, for instance of pipe type and the access cover 35 has at least a transparent window 37 for such sources.

The variants of figures 11, 12 and 16 are particularly proper for the realization of walled supports for shelving and for coat hooks. The upright element 3 of figure 11 has a rectangular section with a greater face that realizes a walled fixing portion 41. Such upright element 3 has only two grooves 9 laterally carried out on the opposite face of the walled fixing portion 41.

It is important to note that the upright element 3 of figure 11 is generally fit also to the walled or ceiling support of projectors, lighthouses, spotlights and lamps allowing to realize illumination systems in which the light points are easily adjustable and replaceable.

Figures 12 and 16 refer to shelf means 38 one end thereof has connections for the fixing means 20 of the connection elements 4. The free end of the shelf means 38 has fixing means 39 for terminal means 40, consisting for instance in lengthened profiles, destined to the support of coat hangers for clothing or other.

An advantage of the present invention is to furnish a connecting device for a structure that allows to quickly and easily obtaining the connections among the elements of the structure.

Other advantage, is to provide a device virtually without damage of its parts because, for instance, of an excessive clamping strength.

Further advantage is to provide a device for carrying out solid and sure connections by hand without using utensils.

Other advantage is to provide a device to realize connections in any point or in a predetermined point of an element.

Further advantage is also to provide a proper device for the realization of self-supporting or walled shelves, eventually predisposed for the installation of technological nets, for the realization of furniture, furniture, containers of technical rack type, for chandeliers and for generally trestle modular structures.

## Claims

1. Connecting device for structures (2) comprising at least an assembly upright elements (3) and an assembly connection elements (4); said device (1) being **characterized in that** each upright element (3) brings at least a couple of connection walls (5) longitudinal and convergent toward the inside of the upright element (3) and fit to find respective jaw means (6, 7) of a connection element (4) operated by clamping means (8) between an open condition (A), in which are disengaged from the couple of connection walls (5), and a closed condition (C) in which they clamp such couple of walls (5).

2. Device according to claim 1 **characterized in that** each upright element (3) has an assembly grooves (9) having at least one internal face constituting a connection wall (5).

3. Device according to claim 2 **characterized in that** the upright elements (3) are prismatic and have at least two adjacent vertexes provided with respective grooves (9).

4. Device according to claim 3 **characterized in that** at least an upright element (3) has a regular polygon transversal section with each vertex provided with a respective groove (9) directed toward the central axle of the upright element (3).

5. Device according to claim 4 **characterized in that** at least an upright element (3) has a square section with the grooves (9) having rectangular section.

6. Device according to claim 1 c**haracterized in** **that** the jaw means (6, 7) have respective match portions (10, 11) nearly parallel to the respective connection walls (5).

7. Device according to claims 5 and 6 **characterized in that** the width of each match portion (10, 11) is lower than the half thickness of the grooves (9).

8. Device according to claim 1 **characterized in that** the clamp mean (8) of each connection element (4) comprises a lever mean (12) swiveling connected to a first jaw mean (6) for driving one of its eccentric mean (13) acting on one end of a balance wheel mean (14) whose central portion and the remaining end are respectively swiveling connected to first (6) and second (7) jaw mean.

9. Device according to claim 8 **characterized in that** the first lever mean (12) is swiveling connected to the first jaw mean (6) by a first pivot (15) positioned in correspondence of the cam shaped eccentric mean (13).

10. Device according to claim 8 **characterized in that** the balance wheel mean (14) is approximately "L" shaped.

11. Device according to claim 9 **characterized in that** the balance wheel mean (14) is connected to jaw means (6, 7) through respective second (16) and third (17) pivots nearly parallel to the first one (15).

12. Device according to claim 8 **characterized in that** the first jaw mean (6) comprises elastic means (18) fit to transmit to the balance wheel mean (14) a contrast force applied to this latter by the eccentric mean (13).

13. Device according to claim 8 **characterized in that** the second jaw mean (7) comprises protruding means (27) fit to find the first jaw mean (6) at least in the closed condition (C).

14. Device according to claim 13 **characterized in that** the protruding means (27), are faced to a shaped surface (28) of the first jaw mean (6) approximately complementary to a corresponding portion of the second jaw mean (7).

15. Device according to claims 11 and 14 **characterized in that** the shaped surface (28) of the first jaw mean (6) and the corresponding portion of the second jaw mean (7) have corresponding beat surfaces (29) that, in the closed condition (C), define a plain containing or next to the axle of the second pivot (16).

16. Device according to claim 8 **characterized in that** the first jaw mean (6) has a lodging (19) for the lever mean (12) in the closed condition (C).

17. Device according to claim 1 **characterized in that** the first jaw mean (6) has fixing means (20) for elements such as shelves, supports, crossbars, panels and the like.

18. Device according to claim 17 **characterized in that** the fixing means (20) include a recess (21) for an edge of an element and holes (22) for screws, thorns or similar for blocking the element.

19. Device according to claim 2 **characterized in that** each upright element (3) comprises longitudinal hollow (23), each made in the bottom of a respective grooves (9), for ruler means (24) fit for the correct longitudinal positioning of the connection elements (4) along the upright element (3).

20. Device according to claims 6 and 19 **characterized in that** the match portion (11) of each first jaw mean (6), has at least one protrusion (25) for one of a plurality of recesses (26) regularly spaced from the ruler means (24), at least in the closed condition (C).

21. Device according to claim 2 **characterized in that** comprises a plurality of retention means (30) each provided with fins (31) destined to partially engage two adjacent grooves (9) of an upright mean (3) and provided with a respective longitudinal seat (32) for a panel, plate or similar.

22. Device according to claim 1 **characterized in that** at least one of the upright elements (3) has at least a side housing (34) for fittings or nets and provided with an access cover (35).

23. Device according to claim 22 **characterized in that** at least said side housing (34) contains light sources (36) and the access cover (35) has at least a transparent window (37) for such sources.

24. Device according to claim 1 **characterized in that** at least one of the upright elements (3) has a fixing walled portion (41).

25. Device according to claim 17 **characterized in** comprises shelf means (38) one end thereof has connections for the fixing means (20) of the connection elements (4).

26. Device according to claim 25 **characterized in that** the free end of the shelf means (38) has fixing means (39) for terminal means (40) destined to the support coat hanger or other.
